# FASCICULE DE BREVET EUROPEEN

(11) **EP 0 429 346 B1**
(45) Date de publication et mention de la délivrance du brevet: **01.02.1995**
(21) Numéro de dépôt: 90403249.7
(22) Date de dépôt: 16.11.1990
(51) Int. Cl.: G11B 7/26, G11B 7/24

(54) **Procédé pour la fabrication d'un disque à lecture optique**
Verfahren zur Herstellung einer optischen Speicherplatte
Manufacturing method for optical disks

(30) Priorité: 21.11.1989 FR 8915261
(43) Date de publication de la demande: 29.05.1991
(73) Titulaire: DIGIPRESS, F-78100 Saint-Germain-en-Laye (FR)
(72) Inventeur: Ledieu, Jean, F-78121 Crespieres (FR)
(74) Mandataire: Armengaud Ainé, Alain

(56) Documents cités:
- WO-A-86/06203
- US-A- 4 414 273
- PATENT ABSTRACTS OF JAPAN vol. 12, no. 231 (P-723) 30 juin 1988,& JP-A-63 023243 (SEIKO EPSON CORP) 30 janvier 1988,
- PATENT ABSTRACTS OF JAPAN vol. 8, no. 89 (P-270) 24 avril 1984,& JP-A-59 003731 (FUJITSU K.K.) 10 janvier 1984,
- PATENT ABSTRACTS OF JAPAN vol. 13, no. 297 (P-895) 10 juillet 1989,& JP-A-01 076439 (AYAO WADA) 22 mars 1989,
- PATENT ABSTRACTS OF JAPAN vol. 9, no. 122 (P-359) 28 mai 1985,& JP-A-60 007631 (CANON K.K.) 16 janvier 1985,

## Description

La présente invention est relative à un procédé de fabrication d'un disque à lecture optique, en particulier du type connu dans la technique sous le terme anglo-saxon de "worm", abréviation de l'expression "write once - read many", soit "écrire une fois, lire plusieurs fois".

L'invention concerne la réalisation de disques destinés à constituer des archives de longue durée, ou plus généralement des supports dont les conditions d'utilisation doivent présenter une grande fiabilité pendant une période de temps prolongée au cours de laquelle le disque peut être lu autant de fois que nécessaire.

On connaît déjà divers procédés de fabrication de disques optiques de grandes qualités, notamment par élaboration d'un disque en verre poli, préalablement revêtu d'une couche ou film mince d'une résine photosensible, dans laquelle l'information codée à lire ultérieurement est réalisée sous la forme d'une image latente créée par un faisceau laser modulé par un ensemble de commande en fonction du signal à encoder. Le développement et l'élimination de la résine dans les zones où celle-ci a été enregistrée laisse subsister dans le film une succession de micro-cuvettes, permettant de procéder ensuite entre les parties de la couche restante, à la gravure du disque dans ces zones. La résine est alors éliminée, notamment par plasma d'oxygène, la face gravée du disque étant finalement recouverte d'une mince couche métallique réfléchissante par évaporation sous vide, cette couche étant elle-même recouverte d'une couche finale de protection. Le disque ainsi obtenu, qui constitue un exemplaire original unique, peut être utilisé tel quel et présente, du fait de la nature inorganique des matériaux utilisés, une pérennité satisfaisante.

En variante on peut, lorsqu'on désire fabriquer un nombre limité d'exemplaires du disque, réaliser directement un masque de reproduction selon une technique sensiblement voisine, puis utiliser ce masque pour fabriquer le nombre de disques désiré par photo-lithogravure.

Dans l'un et l'autre cas, le produit obtenu présente une grande stabilité de la gravure et un comportement en température et vis-à-vis de l'humidité satisfaisant, permettant en particulier de répondre aux objectifs de fiabilité et de tenue dans le temps nécessaires pour constituer un support d'archivage de qualité. Toutefois, ce produit présente l'inconvénient d'être coûteux, notamment lorsqu'il s'agit de réaliser un disque unique ou un tirage d'un tel disque en très faible quantité. Notamment, pour le détenteur de l'information à enregistrer, la fabrication d'un disque de ce genre nécessite généralement d'avoir recours à un laboratoire spécialisé, en fournissant à celui-ci une bande magnétique ou support analogue, permettant de transcrire l'information codée par l'intermédiaire d'un ordinateur commandant le faisceau d'enregistrement de la couche sensible. A noter que cette dernière présente une surface lisse et ne comporte a priori aucun préformatage des zones à enregistrer, et enfin qu'elle est directement en contact avec l'environnement extérieur. La fabrication du disque exige dans ces conditions la mise en oeuvre d'installations complexes et coûteuses, aussi bien au niveau des équipements nécessaires que des moyens permettant de préserver la surface du disque de la pollution ambiante, notamment en imposant de travailler dans des salles dites "blanches", en atmosphère strictement contrôlée. Ces éléments ont une incidence notable sur le prix de revient du disque, en particulier si le tirage prévu de celui-ci est faible, ce qui est généralement le cas par la nature même du produit considéré.

Pour réduire les coûts, on a déjà proposé des ensembles d'enregistrement plus simples, pouvant être exploités par le détenteur ou l'utilisateur de l'information à enregistrer lui-même, la gravure étant effectuée sur des disques de type "worm" où le support est revêtu d'une couche thermo-sensible destinée à enregistrer l'image représentant l'information, cette couche étant protégée extérieurement par un film approprié en résine polymérisée notamment. L'enregistrement s'effectue par la face opposée du support transparent, qui a été avantageusement préformaté de façon à assurer un guidage du faisceau laser issu de l'ensemble d'enregistrement, ce qui simplifie de façon très sensible la conception de ce dernier et par suite l'investissement qu'il nécessite. En outre, avec les disques "worm" du genre précité, la couche sensible recevant l'enregistrement est protégé en permanence, notamment de l'environnement extérieur, par une couche de protection, ce qui donne la possibilité de s'affranchir d'une mise en oeuvre de l'ensemble dans un environnement protégé, les opérations d'enregistrement pouvant être effectuées en atmosphère ordinaire.

Dans un tel type de disque, l'enregistrement de la couche de résine thermosensible s'effectue le plus souvent par ablation thermique, c'est-à-dire par formation de trous dans cette couche , à travers le substrat ou support de verre. Chaque trou correspondant à un signal élémentaire de telle sorte que, à la lecture du disque par un faisceau lumineux, la diffraction de celui-ci par la discontinuité créée au droit de chaque trou de la couche restitue le signal original, chaque trou étant équivalent à une micro-cuvette gravée, telle que réalisée dans un disque classique. Une couche de stabilisation peut être avantageusement prévue entre le support et la couche thermosensible pour améliorer la précision de l'enregistrement. De tels disques "worm" font notamment l'objet de divers brevets antérieurs, tels que l'US-A- 4 414 273 et l'EP-A- 0 130 026.

Mais ces disques ne présentent pas une fiabilité dans le temps suffisante pour certaines applications, en particulier pour réaliser des supports d'archivage, en ne fournissant pas une garantie convenable de la reproduction parfaite du signal enregistré au-delà d'une période de quelques années. Leurs applications sont donc limitées, notamment à la fabrication de disques d'épreuves, le recours aux procédés traditionnels avec les inconvénients mentionnés étant indispensable chaque fois qu'il convient de disposer d'un disque présentant une fiabilité assurée sur une longue durée.

La présente invention concerne un procédé pour réaliser un disque optique de grande qualité et de haute fiabilité, pouvant être obtenu de façon plus économique qu'avec les procédés classiques, en permettant notamment à l'utilisateur de réaliser lui-même l'enregistrement souhaité et en exigeant seulement le recours ultérieur à un laboratoire externe spécialisé, pour réaliser une opération de conditionnement final dans des conditions largement moins coûteuses qu'avec les méthodes traditionnelles.

A cet effet, le procédé considéré, pour la réalisation et la fixation de l'enregistrement d'une information codée sous la forme de trous discrets ménagés dans une couche de résine sensible appliquée sur un substrat transparent, en un matériau inorganique tel que du verre notamment, la couche de résine étant recouverte extérieurement par une couche mince de protection, consiste à enregistrer le signal correspondant à l'information codée par activation localisée de la couche sensible à travers le substrat, puis à retirer la couche de protection, à pratiquer la gravure du substrat à travers les zones activées de la couche sensible jouant le rôle de masque de gravure, à enlever le reliquat de cette couche sensible, à revêtir le substrat gravé par une couche mince métallique réfléchissante et enfin à déposer sur la couche métallique une couche externe de protection finale.

De préférence, la couche sensible activée est une couche thermosensible, l'activation de celle-ci réalisant l'enregistrement du signal consistant en une ablation thermique déterminant dans la couche une pluralité de trous discrets. En variante, la couche sensible est une couche photosensible, l'activation consistant en une insolation suivie d'une révélation des zones activées.

L'opération d'enregistrement préalable de la couche de résine, notamment thermosensible, appliquée sur le substrat et elle-même recouverte d'une couche de protection telles que réalisées dans un disque "worm" classique, s'effectue, à travers le substrat transparent, au moyen d'un encodeur et d'un matériel d'enregistrement, actuellement disponibles dans le commerce et fournissant à partir de données numériques préformatées issues d'une bande magnétique ou d'un autre support, des informations propres à commander un faisceau laser qui, à son tour, délivre des impulsions optiques modulées en fonction du signal à enregistrer, venant pyrolyser la couche sensible et réaliser dans celle-ci les trous nécessaires.

Le disque ainsi enregistré est alors transmis à un laboratoire spécialisé qui réalise les opérations subséquentes, à savoir l'enlèvement de la couche de protection, la gravure du substrat transparent à travers la couche sensible formant masque au droit des trous de celle-ci, l'enlèvement des parties restantes de la couche sensible, le dépôt métallique du film réfléchissant et enfin la mise en place finale de la couche de protection.

Le disque ainsi réalisé conformément au procédé de l'invention comporte de préférence un substrat lisse, d'un matériau inorganique transparent, notamment en verre, dont l'épaisseur est voisine de 1,2 mm. Avantageusement la couche de résine thermosensible pyrolysable déposée sur le substrat présente une épaisseur de 200 à 300 nm (nanomètres), une telle résine étant en elle-même connue dans le domaine considéré. La couche de protection externe est constituée à titre d'exemple, par une résine thermodurcissable.

L'enlèvement de la couche de protection, après formation des trous dans la couche thermosensible par pyrolyse et ablation locale, est réalisé par pelage, plasma réactif, abrasion, dissolution chimique ou tout autre moyen approprié. La gravure du substrat est ensuite réalisée de préférence au moyen d'un plasma réactif, notamment en atmosphère de fluor. Le reliquat de la couche thermosensible est enfin éliminé, avantageusement au moyen d'un plasma en atmosphère d'oxygène.

La couche de métallisation de la surface gravée du substrat, propre à faciliter la réflexion du faisceau de lecture, est alors obtenue par évaporation sous vide d'un dépôt approprié, en particulier d'or ou autre métal équivalent, l'épaisseur de la couche étant voisine de 900 nm. Enfin, la couche finale de protection est obtenue par dépôt d'un film organique ou minéral, en particulier sous la forme d'une couche de chrome, également réalisée par métallisation sous vide et présentant une épaisseur voisine de 2000 nm.

Les diverses caractéristiques de structure d'un disque établi conformément à l'invention, apparaîtront encore à travers la description qui suit d'un exemple de réalisation, donné à titre indicatif et non limitatif, en référence aux dessins annexés sur lesquels :
- Les Figures 1 et 2 illustrent schématiquement une fraction d'un disque "worm" et des moyens propres à réaliser, dans la couche thermosensible de celui-ci, l'enregistrement d'une information codée sous la forme de trous discrets, ménagés dans cette couche.
- La Figure 3 illustre, à travers diverses étapes repérées sur cette Figure sous les références 3a à 3f, la mise en oeuvre des phases ultérieures du procédé à partir du disque de type "worm" pré-enregistré tel que représenté sur la Figure 2.

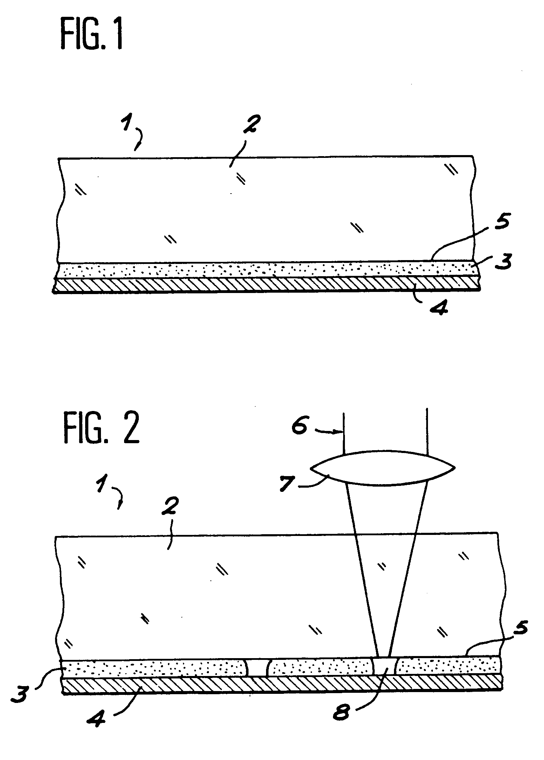

Sur la Figure 1, la référence 1 désigne un disque "worm" classique, comportant notamment un substrat 2, de préférence en verre poli, ou en tout autre matériau inorganique transparent, ce substrat présentant de préférence une épaisseur voisine de 1,2 mm. Sur l'une de ses faces, le substrat 2 est recouvert d'une couche mince 3 d'une résine thermosensible, susceptible d'être éliminée localement par pyrolyse, afin de réaliser l'enregistrement dans cette couche d'une information appropriée ; l'épaisseur de la couche 3 est voisine de 200 à 300 nm. Sur la couche 3 précédente est disposée un revêtement protecteur externe 4, en résine durcissable ou en un autre matériau approprié, éventuellement métallique, protégeant la couche 3 vis-à-vis de l'environnement extérieur. Avantageusement, un film intermédiaire 5 est de préférence disposé à l'interface entre le substrat 2 et la couche thermosensible 3, ce film formant couche de stabilisation dans le but notamment d'améliorer la régularité du dépôt de la couche sensible et l'homogénéité de sa liaison avec le substrat.

De façon également connue dans la technique, le disque 1 ainsi réalisé est soumis à une phase d'enregistrement, dont le principe général est schématisé sur la Figure 2, cette phase étant réalisée au moyen d'un faisceau laser 6 traversant un ensemble de focalisation 7, disposé du côté opposé du substrat 2 par rapport à la couche sensible 3. Avantageusement, la face du substrat 2, adjacente à la couche sensible recevant le faisceau laser, est préformatée, de manière à faciliter le guidage du faisceau lors de l'enregistrement de la couche 3.

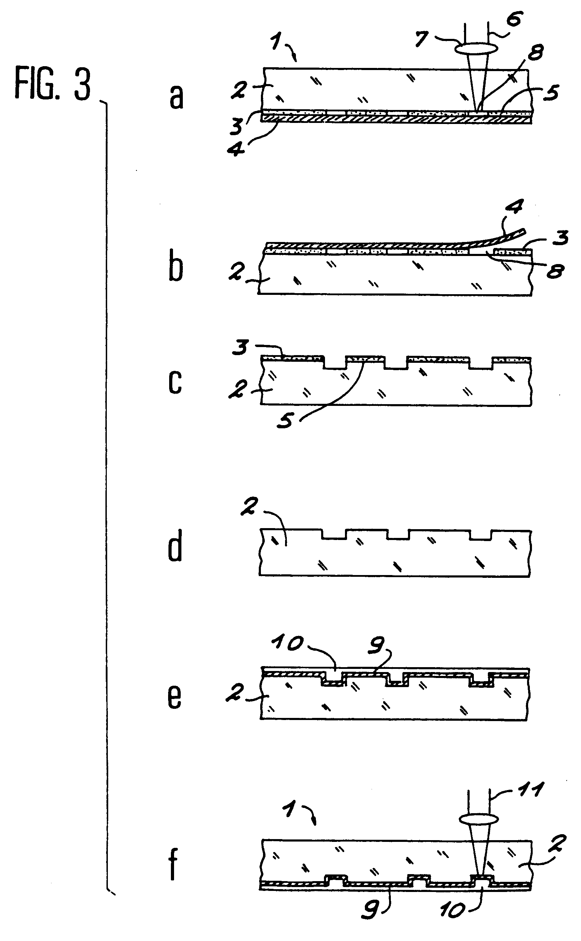

Selon la modulation du faisceau en fonction du signal à enregistrer est ainsi réalisée dans la couche 3, une succession de trous discrets 8 où le matériau de la couche est éliminé par ablation thermique, du fait de la pyrolyse créée en chaque point par l'impact du faisceau ; chacun de ces trous 8 détermine donc une micro-cuvette, représentative d'un état du signal à enregistrer. Le disque obtenu, qui constitue un disque "worm" classique, peut alors faire l'objet d'une lecture de contrôle de la bonne exécution de l'enregistrement, avant que ce disque ne soit confié à un laboratoire extérieur réalisant sur celui-ci les étapes finales de conditionnement, illustrées sur la Figure 3.

Sur la Figure 3a, on retrouve ainsi le disque "worm" enregistré, conforme à celui illustré sur la Figure 2. L'étape suivante schématisée sur la Figure 3b consiste alors, après retournement du disque, à éliminer la couche de protection 4 par tout moyen approprié, notamment par pelage ou encore par suppression directe in situ grâce à une attaque par un plasma réactif ou par un procédé mécanique d'abrasion, ou encore par dissolution chimique.

On procède ensuite à la gravure du substrat 2 à travers les trous 8 réalisés dans la couche sensible 3, de préférence au moyen d'un plasma réactif en atmosphère de fluor agissant au droit de ces trous, la couche 3 formant entre ceux-ci masque de gravure. Le disque ainsi obtenu est représenté schématiquement sur la Figure 3c.

Dans l'étape subséquente, on élimine le reliquat de la couche sensible, par exemple au moyen d'un plasma en atmosphère d'oxygène, pour ne laisser subsister que le substrat 2 préalablement gravé, représenté sur la Figure 3d.

La surface gravée du disque 2 est alors revêtu d'une couche métallique réfléchissante 9, notamment obtenue par évaporation sous vide, cette couche étant avantageusement réalisée au moyen d'un dépôt d'or d'une épaisseur de l'ordre de 900 nm, afin d'améliorer la fiabilité finale du produit obtenu, ce dépôt d'or étant enfin revêtu lui-même comme représenté sur la Figure 3e, d'une couche de protection externe 10 de l'enregistrement. De préférence, la couche 10 est constituée d'un dépôt de chrome d'environ 2000 nm, réalisé également par évaporation sous vide, bien que d'autres matériaux de nature organique ou minérale puissent être également envisagés et leur dépôt sur la couche métallique réalisé différemment.

Le disque ainsi achevé peut enfin être retourné à l'utilisateur, pouvant en effectuer la lecture au moyen d'un faisceau laser 11, avec tout ensemble adapté à une telle lecture (Figure 3f).

Le procédé selon l'invention permet d'obtenir un disque à lecture optique d'une très grande qualité et d'une fiabilité remarquables, tout à fait comparables à celles qui résultent de la mise en oeuvre des procédés traditionnels, tout en évitant des opérations longues et coûteuses d'enregistrement, réalisées nécessairement dans un laboratoire spécialisé. Du fait que les matériaux qui entrent dans la constitution du disque sont pour l'essentiel d'origine minérale (seule la couche de protection finale peut le cas échéant être d'origine organique), ce disque constitue, soit un support d'archivage présentant une pérénnité satisfaisante, soit un support d'enregistrement propre à être utilisé sans inconvénient dans un environnement sévère, même dans des conditions de température et d'humidité particulièrement significatives.

Bien entendu, il va de soi que l'invention ne se limite pas à l'exemple de mise en oeuvre plus spécialement décrit et représenté ci-dessus. En particulier, on pourrait réaliser la couche sensible déposée sur le substrat, non plus au moyen d'une résine thermosensible mais par exemple au moyen d'une résine du type photosensible. Dans ce cas, le développement de la couche s'effectue de façon habituelle, préalablement à l'opération de gravure mais après enlèvement de la couche de protection extérieure. De même, il est clair que les étapes de gravure et celles qui suivent qui, dans l'exemple considéré, ont été supposées effectuées par un laboratoire extérieur pourraient être réalisées par l'utilisateur lui-même dans la mesure où il dispose des moyens nécessaires, ces étapes pouvant être menées à bien en séquence, de manière manuelle ou automatique.

## Revendications

1. Procédé pour la fabrication d'un disque à lecture optique, notamment pour la réalisation et la fixation de l'enregistrement d'une information codée dans une couche de résine sensible appliquée sur un substrat transparent en matériau inorganique, tel que du verre notamment, la couche de résine étant recouverte extérieurement par une couche mince de protection, le procédé consistant à enregistrer le signal correspondant à l'information codée par activation localisée de la couche sensible (3) à travers le substrat (2), puis à retirer la couche de protection (4), à pratiquer la gravure du substrat à travers les zones activées de la couche sensible jouant le rôle de masque de gravure, à enlever le reliquat de cette couche sensible, à revêtir le substrat gravé par une couche mince métallique réfléchissante (9) et enfin à déposer sur la couche métallique une couche externe de protection finale (10).

2. Procédé selon la revendication 1, caractérisé en ce que la couche sensible activée est une couche thermosensible, l'activation de celle-ci réalisant l'enregistrement du signal consistant en une ablation thermique, déterminant dans la couche une pluralité de trous discrets (8).

3. Procédé selon la revendication 1, caractérisé en ce que la couche sensible est une couche photosensible, l'activation consistant en une insolation suivie d'une révélation des zones activées.

4. Procédé selon l'une quelconque des revendications 1 à 3, caractérisé en ce que l'activation localisée de la couche sensible (3) s'effectue au moyen d'un faisceau laser.

5. Procédé selon l'une quelconque des revendications 1 à 4, caractérisé en ce que l'épaisseur du substrat est voisine de 1,2 mm.

6. Procédé selon l'une quelconque des revendications 1 à 4, caractérisé en ce que l'enlèvement de la couche de protection est réalisé par pelage, plasma réactif, abrasion, dissolution chimique.

7. Procédé selon l'une quelconque des revendications 1 à 4, caractérisé en ce que la gravure est réalisée au moyen d'un plasma réactif, notamment en atmosphère de fluor.

8. Disque obtenu par le procédé selon l'une quelconque des revendications 1 à 4, caractérisé en ce que l'enlèvement du reliquat de la couche sensible est réalisé au moyen d'un plasma en atmosphère d'oxygène.

9. Procédé selon l'une quelconque des revendications 1 à 4, caractérisé en ce que la couche mince, métallique et réfléchissante (9) recouvrant le substrat gravé (2) est réalisée par métallisation sous vide.

10. Procédé selon la revendication 9, caractérisé en ce que la couche métallique est réalisée par dépôt d'un métal inaltérable, notamment d'or.

11. Procédé selon l'une des revendications 9 ou 10, caractérisé en ce que l'épaisseur de la couche métallique est voisine de 900 nm.

12. Procédé selon l'une quelconque des revendications 1 à 4, caractérisé en ce que la couche externe de protection finale (10) est obtenue par dépôt d'un film organique ou minéral.

13. Procédé selon la revendication 12, caractérisé en ce que la couche de protection est constituée par un métal inaltérable et dur, notamment par du chrome.

14. Procédé selon l'une des revendications 12 ou 13, caractérisé en ce que l'épaisseur de la couche de protection est voisine de 2000 nm.

## Patentansprüche

1. Verfahren zur Herstellung einer optisch lesbaren Speicherplatte besonders zur Herstellung und Fixierung der Aufzeichnung einer codierten Information in einer sensiblen Kunstharzschicht, die auf einem transparenten Träger aus anorganischem Material, wie besonders Glas aufgebracht ist, wobei die Kunstharzschicht außen durch eine dünne Schutzschicht abgedeckt ist und das Verfahren darin besteht, das der codierten Information entsprechende Signal durch örtliche Aktivierung der sensiblen Schicht (3) durch das Substrat (2) hindurch aufzuzeichnen, dann die Schutzschicht (4) zu entfernen, die Gravur des Trägers durch die aktivierten Zonen der sensiblen Schicht, welche die Rolle einer Gravur-Maske spielt, durchzuführen, den Rest dieser sensiblen Schicht zu entfernen, den gravierten Träger mit einer dünnen reflektierenden Metallschicht (9) zu beschichten und schließlich auf der dünnen Metallschicht eine äußere Schutzschicht für den endgültigen Schutz abzuscheiden.

2. Verfahren nach Anspruch 1, **dadurch gekennzeichnet**, daß die aktivierte sensible Schicht eine wärmeempfindliche Schicht ist und die Aktivierung derselben, welche zur Realisierung der Aufzeichnung des Signals führt, in einer thermischen Abtragung besteht, welche in der Schicht eine Mehrzahl von gesonderten Löchern (8) bestimmt.

3. Verfahren nach Anspruch 1, **dadurch gekennzeichnet**, daß die sensible Schicht eine photoempfindliche Schicht ist und die Aktivierung in einer Belichtung und einer anschließenden Entwicklung der aktivierten Zonen besteht.

4. Verfahren nach einem der Ansprüche 1 bis 3, **dadurch gekennzeichnet**, daß die örtliche Aktivierung der sensiblen Schicht (3) mittels eines Laserstrahls erfolgt.

5. Verfahren nach einem der Ansprüche 1 bis 4, **dadurch gekennzeichnet**, daß die Dicke des Trägers in der Nähe von 1,2 mm liegt.

6. Verfahren nach einem der Ansprüche 1 bis 4, **dadurch gekennzeichnet**, daß die Entfernung der Schutzschicht durch Abziehen, reaktives Plasma, Abtragung oder chemische Auflösung durchgeführt wird.

7. Verfahren nach einem der Ansprüche 1 bis 4, **dadurch gekennzeichnet**, daß die Gravur mittels eines reaktiven Plasmas, besonders in Fluor-Atmosphäre durchgeführt wird.

8. Verfahren nach einem der Ansprüche 1 bis 4, **dadurch** **gekennzeichnet,** daß die Entfernung des Restes der sensiblen Schicht mittels eines Plasmas in Sauerstoff-Atmosphäre durchgeführt wird.

9. Verfahren nach einem der Ansprüche 1 bis 4, **dadurch gekennzeichnet**, daß die dünne und reflektierende Metallschicht (9), die den gravierten Träger (2) bedeckt, durch Metallbeschichtung im Vakuum hergestellt wird.

10. Verfahren nach Anspruch 9, **dadurch gekennzeichnet**, daß die Metallschicht durch Abscheidung eines unveränderlichen Metalls, besonders Gold hergestellt wird.

11. Verfahren nach einem der Ansprüche 9 oder 10, **dadurch gekennzeichnet**, daß die Dicke der Metallschicht in der Nähe von 900 nm liegt.

12. Verfahren nach einem der Ansprüche 1 bis 4, **dadurch gekennzeichnet**, daß die äußere Schutzschicht (10) zum endgültigen Schutz durch Abscheidung eines organischen oder mineralischen Films erhalten wird.

13. Verfahren nach Anspruch 12, **dadurch gekennzeichnet**, daß die Schutzschicht aus einem unveränderlichen und harten Metall, besonders Chrom besteht.

14. Verfahren nach einem der Ansprüche 12 oder 13, **dadurch gekennzeichnet**, daß die Dicke der Schutzschicht in der Nähe von 2000 nm liegt.

## Claims

1. Method for the manufacture of a record for optical reading, in particular for carrying-out and fixing the recording of coded information in a layer of sensitive resin applied to a transparent substrate of inorganic material, such as glass in particular, the layer of resin being covered externally by a thin protection layer, the method consisting of recording the signal corresponding to the coded information by localised activation of the sensitive layer (3) through the substrate (2), then of removing the protection layer (4), of carrying out the engraving of the substrate through the activated zones of the sensitive layer fulfilling the role of engraving mask, of removing the remainder of this sensitive layer, of coating the engraved substrate with a thin reflecting metallic layer (9) and finally of depositing on the metallic layer a final external protection layer (10).

2. Method according to Claim 1, characterised in that the activated sensitive layer is a heat-sensitive layer, the activation of the latter bringing about the recording of the signal consisting of a thermal ablation, causing a plurality of separate holes (8) in the layer.

3. Method according to Claim 1, characterised in that the sensitive layer is a photo-sensitive layer, the activation consisting of exposure to the sun followed by revealing of the activated zones.

4. Method according to any one of Claims 1 to 3, characterised in that the localised activation of the sensitive layer (3) takes place by means of a laser beam.

5. Method according to any one of Claims 1 to 4, characterised in that the thickness of the substrate is close to 1.2 mm.

6. Method according to any one of Claims 1 to 4, characterised in that the removal of the protection layer is carried out by peeling, reactive plasma, abrasion, chemical dissolving.

7. Method according to any one of Claims 1 to 4, characterised in that the engraving is carried out by means of a reactive plasma, in particular in an atmosphere of fluorine.

8. Record obtained by the method according to any one of Claims 1 to 4, characterised in that the removal of the remainder of the sensitive layer is carried out by means of a plasma in an atmosphere of oxygen.

9. Method according to any one of Claims 1 to 4, characterised in that the thin metallic and reflecting layer (9) covering the engraved substrate (2) is produced by metallisation in a vacuum.

10. Method according to Claim 9, characterised in that the metallic layer is produced by the deposition of an unalterable metal, in particular gold.

11. Method according to one of Claims 9 or 10, characterised in that the thickness of the metallic layer is close to 900 nm.

12. Method according to any one of Claims 1 to 4, characterised in that the external final protection layer (10) is obtained by the deposition of an organic or mineral film.

13. Method according to Claim 12, characterised in that the protection layer is constituted by an unalterable and hard metal, in particular by chromium.

14. Method according to one of Claims 12 or 13, characterised in that the thickness of the protection layer is close to 2000 nm.
